# EUROPEAN PATENT SPECIFICATION

(11) **EP 4 393 998 B1**
(45) Date of publication and mention of the grant of the patent: **19.08.2026**
(21) Application number: 23204690.4
(22) Date of filing: 19.10.2023
(51) Int. Cl.: C08L 67/04

(54) **A BIODEGRADABLE THERMOPLASTIC COMPOSITE AND A METHOD FOR PRODUCING THE BIODEGRADABLE THERMOPLASTIC COMPOSITE**
BIOLOGISCH ABBAUBARER THERMOPLASTISCHER VERBUNDWERKSTOFF UND VERFAHREN ZUR HERSTELLUNG DES BIOLOGISCH ABBAUBAREN THERMOPLASTISCHEN VERBUNDWERKSTOFFS
COMPOSITE THERMOPLASTIQUE BIODÉGRADABLE ET PROCÉDÉ DE FABRICATION DU COMPOSITE THERMOPLASTIQUE BIODÉGRADABLE

(30) Priority: 02.01.2023 PL 44339123
(43) Date of publication of application: 03.07.2024
(73) Proprietor: Politechnika Rzeszowska im. Ignacego Lukasiewicza, 35-959 Rzeszów (PL)
(72) Inventor: Janowski, Grzegorz, Rzeszow (PL); Fracz, Wieslaw, Rzeszow (PL); Bak, Lukasz, Rzeszow (PL)

(56) References cited:
- CN-A- 114 196 180
- GB-A- 2 567 532

## Description

The object of the invention is a biodegradable thermoplastic composite and a method for producing the biodegradable thermoplastic composite, used especially in products which are loaded during use, intended for contact with food.

From the publication by Singh S., Mohanty A.K. entitled: "Wood fiber reinforced bacterial bioplastic composites: Fabrication and performance evaluation," Composites Science and Technology, 67 (2007), 1753-1763, a poly(3-hydroxybutyric acid-co-3-hydroxyvaleric acid) matrix composite with a variable content of wood fibres which was processed on a mini-extruder and mini-injector is known. As a polymer matrix, PHBV under the trade name of Biopol was used, and as a filler, wood fibres with a fibre length ranging from 1.6 mm to 1.65 mm and a diameter ranging from 0.3 mm to 0.4 mm were applied. The produced biocomposites with a PHBV matrix contained from 10% by weight to 40% by weight of wood fibres.

From patent description PL 234621 B1, a method for obtaining thermoplastic composites reinforced with short fibres which consists in mixing a polymer matrix and the short cellulose fibres and a compatibilizer is known. In this known method, a polymer matrix-cellulose fibre interphase is modified in two composite granulates A and B with a compatibilizer or anti-compatibilizer, wherein the composite granulates A and B are obtained by mixing, in a molten state, the polymer matrix with the cellulose fibres in a ratio from 70:30% by weight to 50:50% by weight, in the granulate A, with the participation of the compatibilizer, which is a polymer wax miscible with the matrix polymer in the amount of 0.5-3% by weight relative to the matrix polymer, and, in the granulate B, with the participation of the anti-compatibilizer, which is a polymer wax immiscible with the matrix polymer in the amount of 0.25-3% by weight relative to the matrix polymer, then the granulates A and B are mixed, in a molten state, in a ratio from 1:1 to 3:1 during further injection processing or extrusion to obtain a composite with a variable fibre-matrix interphase.

From the specification provided in invention application CN 102850741 A, a biodegradable composite material with a polyhydroxyalkanoate matrix which comprises 30-80 parts of homopolimerization hydroxyalkanoate, 20-70 parts of copolimerization hydroxyalkanoate, 15-40 parts of plant fibres, 1.5-6 parts of a coupling agent, 0.5-10 parts of an antioxidant, and 1-6 parts of a processing additive is known.

From the specification provided in invention application CN 109467896 A, a material which comprises 48 to 53 parts by weight of PHBV, 50 to 55 parts by weight of peanut protein in powder form, 14 to 15 parts by weight of coconut fibre, 30 to 40 parts by weight of starch, 20 to 24 parts by weight of chitin, 1.5 to 1.9 parts by weight of jute fibre, 3 to 6 parts by weight of wood fibre, 1.5 to 2.2 parts by weight of silane coupling agent, 20 to 30 parts by weight of polybutylene succinate, 2 to 3 parts by weight of potassium sorbate, 2 to 3 parts by weight of dehydroacetic acid, 1.4 to 1.6 parts by weight of dioctyl phthalate, 2.3 to 3.6 parts by weight of zinc stearate, 8 to 12 parts by weight of hard clay, 5 to 9 parts by weight of kaolin, 7 to 11 parts by weight of sepiolite, and 1 to 1.4 parts by weight of 2,6-di-tert-4-methylphenol is known.

From the specification provided in invention application CA 2641922 A1, a material which comprises poly(hydroxybutyrate) (PHB) or polycaprolactone (PCL) as a polymer matrix and, as a filler in a mass proportion of 5% to 70%, natural fibres such as sisal, sugarcane bagasse, coconut, piasaba, soybean, jute, ramie, curaua is known. Also as a filler, from 5 to 70% by weight of wood flour or dust, starch, rice husks can be used.

From the specification provided in invention application US 2009023836 A1, a material which contains poly(hydroxybutyrate) (PHB) or poly(lactic acid) (PLA) as a polymer matrix and, as a filler in a mass proportion of 5% to 70%, natural fibres such as sisal, sugarcane bagasse, coconut, piasaba, soybean, jute, ramie and curaua is known. Also as a filler, from 5 to 70% by weight of wood flour or dust, starch, rice husks can be used.

From the publication by Baek Bong-San, et al., "Development and application of green composites: using coffee ground and bamboo flour," Journal of Polymers and the Environment, 21 (2013), 702-709, a PLA (polylactide) matrix composite with a variable content of used coffee grounds and bamboo flour which was processed on a double-screw extruder at temperatures of 165-185°C and at a screw rotational speed of 200 rpm is known. The produced composites comprised 30% of used coffee grounds or 30% of bamboo flour.

From the publication by Huang L., Mu B., Yi X., Li S., Wang Q. entitled "Sustainable use of coffee husks for reinforcing polyethylene composites" Journal of Polymers and the Environment, 26, (2018), 48-58, a HDPE (high density polyethylene) matrix composite with a variable content of coffee grounds from 40 to 70% which was processed on a single- and double-screw extruder at temperatures of 160-170°C and at a rotational speed of 40 rpm for a double-screw extruder and 20 rpm for a single-screw extruder is known.

From the publication by Cestari S.P., Mendes L.C., Silva D.F.D., Chimanowsky Jr., J.P., Altstädt V., Demchuk V., Keller J.H. entitled "Properties of recycled high density polyethylene and coffee dregs composites," Polimeros, 23 (2013), 733-737, a composite with a HDPE (high density polyethylene) recyclate matrix with a variable content of coffee grounds from 10 to 60% which was processed on a single-screw extruder at temperatures of 178-260°C and at a rotational speed of 330 rpm is known.

From the specification provided in Chinese invention CN 114196180 A, a method for producing a composite whose matrix is in the form of PHBV and filler is in the form of coffee shell carbon is known. In the method, the coffee shell is first crushed and carbonized at a high temperature under argon atmosphere, then the obtained carbon powder is crushed and sieved to obtain carbon powder with different particle sizes. The powder is then dried in a jet drying oven and PHBV is placed in the oven for 24 hours at 80°C. The PHBV is then mixed with the coffee shell carbon powder, wherein the proportion of the powder in the mixture is from 50% to 60% by weight. The mixture is extruded on a double-screw extruder and injection-moulded.

GB2567532A patent application discloses a cup formed from bioplastic material which comprises used coffee grounds. The bioplastic material may be a a thermoplastic polymer material, and preferably contains between 10% and 60% used coffee grounds by weight and the bioplastic material may contain between 10% and 60% bioadhesive by weight. A method of forming a cup from a thermoplastic bioplastic material is also disclosed and comprises step of manufacturing a thermoplastic bioplastic material by mixing thermoplastic polymer, bioadhesive and used coffee grounds to form bioplastic pellets suitable for injection moulding or blow moulding. Theremoplastic polymer can be PHBV.

A significant problem is the ever-increasing amount of polymeric waste. Polymeric materials are mostly of petrochemical origin and do not biodegrade and are recycled with various effects. PHBV, which belongs to the group of polyhydroxyalkanoates (PHAs), is a polymer of natural origin, fully biodegradable, neutral in living organisms and having properties similar to polypropylene - a material widely used in injection and extruded products. Due to relatively high production costs, PHBV is rarely used for extruded or injection moulded products, which is why currently there are few possibilities for its implementation.

The object of the invention was to produce a biodegradable thermoplastic composite which would be cheap to produce and whose processing would be easy and possible to carry out by extrusion and injection moulding, which would make it widely used for the manufacturing of products, such as, in particular, everyday products, and which, due to its biodegradability, without the release of toxic compounds into the environment, would be possible to be safely disposed and, in addition, would be recyclable.

A biodegradable thermoplastic composite comprising a polymer matrix in the form of poly(3-hydroxybutyric acid-co-3-hydroxyvaleric acid) and coffee as a filler according to the invention is characterized in that the coffee is in the form of ground used dried grounds with variable particle sizes whose linear dimensions are in the range of 1 µm to 500 µm, and its content in the composite is from 15 to 45 parts by weight, while the content of poly(3-hydroxybutyric acid-co-3-hydroxyvaleric acid) is from 55 to 85 parts by weight.

A method for obtaining the biodegradable thermoplastic composite according to the invention is characterized in that from 55 to 85 parts by weight of poly(3-hydroxybutyric acid-co-3-hydroxyvaleric acid) and from 15 to 45 parts by weight of a filler in the form of ground used dried coffee grounds variable particle sizes whose linear dimensions are in the range of 1 µm to 500 µm are mixed, and then the mixture is dried at a temperature of at most 90°C, after which the mixture is fed to a screw extruder and extruded, and then the extrudates are granulated.

Preferably, poly(3-hydroxybutyric acid-co-3-hydroxyvaleric acid) and ground used dried coffee grounds are mixed in a drum mixer with a diameter of 0.1m to 2m.

Further benefits are obtained when the mixing of poly(3-hydroxybutyric acid-co-3-hydroxyvaleric acid) with the ground used dried coffee grounds, in the drum mixer, is carried out at a speed of 23 rpm to 37 rpm.

Further benefits are obtained when the mixing of poly(3-hydroxybutyric acid-co-3-hydroxyvaleric acid) with the ground used dried coffee grounds is carried out at room temperature.

Further benefits are obtained if the mixture is dried for 3 hours at a temperature of 90°C.

Further benefits are obtained when the ground used dried coffee grounds, before being mixed with poly(3-hydroxybutyric acid-co-3-hydroxyvaleric acid), are sieved on a sieve.

Further benefits are obtained if a single-screw extruder is used to extrude the mixture, wherein in the single-screw extruder an extrusion head temperature of 157°C to 175°C and a temperature of 148°C to 170°C for the heating zones in the extruder plasticizing system are used.

Further benefits are obtained if, in the single-screw extruder, the extrusion process is carried out at a peripheral speed of the screw from 4 m/min. to 8 m/min.

The new biodegradable thermoplastic composite produced with the method of the invention is widely used in the production of products manufactured using injection moulding and extrusion technology. This new biodegradable thermoplastic composite is not subject to rapid wear and tear, can function as a loaded product during use, can have direct contact with living organisms, and in addition it can be used for the production of, in particular, plastic pallets, boxes for storing fruit or vegetables, disposable dishes, cutlery, hospital waste containers, ice cream sticks, packaging for selected food products, plant covers, protective and securing elements for higher value products. The use of PHBV in powder form, and not in the form of commonly used granules, in the method for obtaining the biodegradable thermoplastic composite of the invention, favourably affects uniform mixing of the polymer with ground used coffee grounds, due to a similar particle size of both components. Sieving the ground used coffee grounds with a sieve, in order to disperse larger clusters, allows for better mixing of both phases. The new biodegradable thermoplastic composite, compared to pure PHBV, is characterized by a greater tensile elastic modulus, increased hardness, smaller processing shrinkage and uniformity of the microstructure. The tensile elastic modulus, hardness and processing shrinkage of the resulting extruded and injected products depend on the amount of the filler used in the polymer matrix.

The object of the present invention is presented in embodiments.

The biodegradable thermoplastic composite of the invention, in the first embodiment, comprises 85 parts by weight of poly(3-hydroxybutyric acid-co-3-hydroxyvaleric acid) (PHBV) and 15 parts by weight of ground used dried coffee grounds with variable particle sizes whose linear dimensions are from 1 µm to 500 µm.

The biodegradable thermoplastic composite of the invention, in the second embodiment, comprises 70 parts by weight of PHBV and 30 parts by weight of ground used dried coffee grounds with variable particle sizes whose linear dimensions are from 1 µm to 500 µm.

The biodegradable thermoplastic composite of the invention, in the third embodiment, comprises 55 parts by weight of PHBV and 45 parts by weight of ground used dried coffee grounds with variable particle sizes whose linear dimensions are from 1 µm to 500 µm.

The method for obtaining the biodegradable polymer composite of the invention, in the first embodiment, is carried out in the way that the ground used dried coffee grounds are sieved through a sieve with a mesh size of 0.7 mm, and then 85 parts by weight of poly(3-hydroxybutyric acid-co-3-hydroxyvaleric acid) (PHBV) and 15 parts by weight of ground used dried coffee grounds with variable particle sizes whose linear dimensions are in the range of 1 µm to 500 µm, are mixed in a drum mixer at room temperature at a speed of 37 rpm, after which the resulting mixture is dried for 3 hours at a temperature of 90°C. The dried mixture is dosed into a charging hopper of a single-screw extruder. During extrusion, the temperature of the extrusion head is kept constant at 175°C, and the heating zones of the extruder plasticizing system are maintained at 170°C, 160°C, 150°C respectively. The extrusion process is carried out at a constant peripheral speed of the screw of 8 m/min. The resulting extrudates of the biodegradable thermoplastic composite are granulated. The obtained biodegradable polymer composite is characterized by tensile elastic modulus of 3308.81 MPa, hardness of 133.30 N/mm², longitudinal processing shrinkage of 1.12%, transverse processing shrinkage of 2.1% and thickness processing shrinkage of 3.02%, while pure PHBV is characterized by tensile elastic modulus of 2617.37 MPa, hardness of 84.50 N/mm², longitudinal processing shrinkage of 2.47%, transverse processing shrinkage of 2.69% and thickness processing shrinkage of 4.86%.

The method for obtaining the biodegradable polymer composite of the invention in the second embodiment is carried out in the way that the ground used and dried coffee grounds are sieved through a sieve with a mesh size of 0.7 mm, and then 70 parts by weight of poly(3-hydroxybutyric acid-co-3-hydroxyvaleric acid) (PHBV) and 30 parts by weight of ground used dried coffee grounds with variable particle sizes whose linear dimensions are in the range of 1 µm to 500 µm are mixed in a drum mixer at room temperature at a speed of 30 rpm, after which the resulting mixture is dried for 3 hours at a temperature of 90°C. The dried mixture is dosed into a charging hopper of a single-screw extruder. During extrusion, the temperature of the extrusion head is kept constant at 165°C, and the heating zones of the extruder plasticizing system are maintained at 160°C, 160°C, 155°C respectively. The extrusion process is carried out at a constant peripheral speed of the screw of 7 m/min. The resulting extrudates of the biodegradable thermoplastic composite are granulated. The obtained biodegradable polymer composite is characterized by tensile elastic modulus of 3085.36 MPa, hardness of 115.93 N/mm², longitudinal processing shrinkage of 1.1%, transverse processing shrinkage of 1.76% and thickness processing shrinkage of 1.28%, while pure PHBV is characterized by tensile elastic modulus of 2617.37 MPa, hardness of 84.50 N/mm², longitudinal processing shrinkage of 2.47%, transverse processing shrinkage of 2.69% and thickness processing shrinkage of 4.86%.

The method for obtaining the biodegradable polymer composite of the invention in the third embodiment is carried out in the way that the ground used and dried coffee grounds are sieved through a sieve with a mesh size of 0.7 mm, and then 55 parts by weight of poly(3-hydroxybutyric acid-co-3-hydroxyvaleric acid) (PHBV) and 45 parts by weight of ground used dried coffee grounds with variable particle sizes whose linear dimensions are in the range of 1 µm to 500 µm are mixed in a drum mixer at room temperature at a speed of 23 rpm, after which the resulting mixture is dried for 3 hours at a temperature of 90°C. The dried mixture is dosed into a charging hopper of a single-screw extruder. During extrusion, the temperature of the extrusion head is kept constant at 157°C, and the heating zones of the extruder plasticizing system are maintained at 155°C, 150°C, 148°C respectively. The extrusion process is carried out at a constant peripheral speed of the screw of 6 m/min. The resulting extrudates of the biodegradable thermoplastic composite are granulated. The obtained biodegradable polymer composite is characterized by tensile elastic modulus of 3092,54 MPa, hardness of 105,75 N/mm², longitudinal processing shrinkage of 1.07%, transverse processing shrinkage of 1.35% and thickness processing shrinkage of 0.62%, while pure PHBV is characterized by tensile elastic modulus of 2617.37 MPa, hardness of 84.50 N/mm², longitudinal processing shrinkage of 2.47%, transverse processing shrinkage of 2.69% and thickness processing shrinkage of 4.86%.

## Claims

1. A biodegradable thermoplastic composite comprising a polymer matrix in the form of poly(3-hydroxybutyric acid-co-3-hydroxyvaleric acid) and coffee as a filler, **characterized in that** the coffee is in the form of ground used dried grounds with variable particle sizes whose linear dimensions are in the range of 1 µm to 500 µm, and its content in the composite is from 15 to 45 parts by weight, while the content of poly(3-hydroxybutyric acid-co-3-hydroxyvaleric acid) is from 55 to 85 parts by weight.

2. A method for obtaining the biodegradable thermoplastic composite, as defined in claim 1, **characterized in that** from 55 to 85 parts by weight of poly(3-hydroxybutyric acid-co-3-hydroxyvaleric acid) and from 15 to 45 parts by weight of a filler in the form of ground used dried coffee grounds with variable particle sizes whose linear dimensions are in the range of 1 µm to 500 µm are mixed, and then the mixture is dried at a temperature of at most 90°C, after which the mixture is fed to a screw extruder and extruded, and then the extrudates are granulated.

3. The method of claim 2, **characterized in that** poly(3-hydroxybutyric acid-co-3-hydroxyvaleric acid) and the ground used dried coffee grounds are mixed in a drum mixer.

4. The method of claim 3, **characterized in that** the drum mixer with a diameter of 0.1m to 2m is used.

5. The method of claim 3 or 4, **characterized in that** the mixing of poly(3-hydroxybutyric acid-co-3-hydroxyvaleric acid) with the ground used dried coffee grounds, in the drum mixer, is carried out at a speed of 23 rpm to 37 rpm.

6. The method of one of claims from 2 to 5, **characterized in that** the mixing of poly(3-hydroxybutyric acid-co-3-hydroxyvaleric acid) with the ground used dried coffee grounds is carried out at room temperature.

7. The method of one of claims from 2 to 6, **characterized in that** the mixture is dried for 3 hours at a temperature of 90°C.

8. The method of one of claims from 2 to 7, **characterized in that** the ground used dried coffee grounds, before being mixed with poly(3-hydroxybutyric acid-co-3-hydroxyvaleric acid), are sieved with a sieve.

9. The method of one of claims from 2 to 8, **characterized in that** a single-screw extruder is used to extrude the mixture.

10. The method of claim 9, **characterized in that** a temperature of 157°C to 175°C for the extrusion head and a temperature of 148°C to 170°C for the heating zones in the extruder plasticizing system are used in the single-screw extruder.

11. The method of claim 9 or 10, **characterized in that** extrusion in the single-screw extruder is carried out at a peripheral speed of the screw from 4 m/min to 8 m/min.

## Patentansprüche

1. Biologisch abbaubarer thermoplastischer Verbundwerkstoff, aufweisend eine Polymermatrix aus Poly(3-hydroxybuttersäure-co-3-hydroxyvaleriansäure) sowie Kaffee als Füllstoff, **dadurch gekennzeichnet, dass** der Kaffee als gebrauchter, getrockneter und gemahlener Kaffeesatz mit Partikelgrößen unterschiedlicher Ausprägung, deren lineare Abmessungen im Bereich von 1 µm bis 500 µm liegen, vorliegt, wobei dessen Anteil im Verbundwerkstoff 15 bis 45 Gewichtsteile und der Anteil der Poly(3-hydroxybuttersäure-co-3-hydroxyvaleriansäure) 55 bis 85 Gewichtsteile beträgt.

2. Verfahren zur Herstellung des biologisch abbaubaren thermoplastischen Verbundwerkstoffs nach Anspruch 1, **dadurch gekennzeichnet, dass** 55 bis 85 Gewichtsteile Poly(3-hydroxybuttersäure-co-3-hydroxyvaleriansäure) und 15 bis 45 Gewichtsteile eines Füllstoffs in Form von gebrauchtem, getrocknetem und gemahlenem Kaffeesatz mit Partikelgrößen unterschiedlicher Ausprägung, deren lineare Abmessungen im Bereich von 1 µm bis 500 µm liegen, miteinander vermischt werden, die erhaltene Mischung anschließend bei einer Temperatur von höchstens 90 °C getrocknet, danach einem Schneckenextruder zugeführt, extrudiert und das erhaltene Extrudat schließlich granuliert wird.

3. Verfahren nach Anspruch 2, **dadurch gekennzeichnet, dass** die Poly(3-hydroxybuttersäure-co-3-hydroxyvaleriansäure) und der gebrauchte, getrocknete und gemahlene Kaffeesatz in einem Trommelmischer vermischt werden.

4. Verfahren nach Anspruch 3, **dadurch gekennzeichnet, dass** ein Trommelmischer mit einem Durchmesser von 0,1 m bis 2 m verwendet wird.

5. Verfahren nach Anspruch 3 oder 4, **dadurch gekennzeichnet, dass** die Vermischung der Poly(3-hydroxybuttersäure-co-3-hydroxyvaleriansäure) mit dem gebrauchten, getrockneten und gemahlenen Kaffeesatz im Trommelmischer bei einer Drehzahl von 23 U/min bis 37 U/min erfolgt.

6. Verfahren nach einem der Ansprüche 2 bis 5, **dadurch gekennzeichnet, dass** die Vermischung der Poly(3-hydroxybuttersäure-co-3-hydroxyvaleriansäure) mit dem gebrauchten, getrockneten und gemahlenen Kaffeesatz bei Raumtemperatur erfolgt.

7. Verfahren nach einem der Ansprüche 2 bis 6, **dadurch gekennzeichnet, dass** die Mischung bei einer Temperatur von 90 °C über einen Zeitraum von 3 Stunden getrocknet wird.

8. Verfahren nach einem der Ansprüche 2 bis 7, **dadurch gekennzeichnet, dass** der gebrauchte, getrocknete und gemahlene Kaffeesatz vor dem Vermischen mit der Poly(3-hydroxybuttersäure-co-3-hydroxyvaleriansäure) durch ein Sieb gesiebt wird.

9. Verfahren nach einem der Ansprüche 2 bis 8, **dadurch gekennzeichnet, dass** zur Extrusion der Mischung ein Einschneckenextruder verwendet wird.

10. Verfahren nach Anspruch 9, **dadurch gekennzeichnet, dass** im Einschneckenextruder für den Extrusionskopf eine Temperatur von 157 °C bis 175 °C und für die Heizzonen der Plastifiziereinheit des Extruders eine Temperatur von 148 °C bis 170 °C eingestellt wird.

11. Verfahren nach Anspruch 9 oder 10, **dadurch gekennzeichnet, dass** die Extrusion im Einschneckenextruder bei einer Umfangsgeschwindigkeit der Schnecke von 4 m/min bis 8 m/min durchgeführt wird.

## Revendications

1. Composite thermoplastique biodégradable comprenant une matrice polymère constituée de poly(acide 3-hydroxybutyrique-co-3-hydroxyvalérique) et du café en tant que charge, **caractérisé en ce que** le café se présente sous forme de marc de café usagé, séché et moulu, de tailles de particules variables, dont les dimensions linéaires sont comprises entre 1 µm et 500 µm, et **en ce que** sa teneur dans le composite est comprise entre 15 et 45 parties en poids, tandis que la teneur en poly(acide 3-hydroxybutyrique-co-3-hydroxyvalérique) est comprise entre 55 et 85 parties en poids.

2. Procédé d'obtention d'un composite thermoplastique biodégradable selon la revendication 1, **caractérisé en ce que** l'on mélange de 55 à 85 parties en poids de poly(acide 3-hydroxybutyrique-co-3-hydroxyvalérique) avec de 15 à 45 parties en poids d'une charge constituée de marc de café usagé, séché et moulu, à tailles de particules variables, dont les dimensions linéaires sont comprises entre 1 µm et 500 µm, puis le mélange est séché à une température ne dépassant pas 90 °C, après quoi il est introduit dans une extrudeuse à vis où il est extrudé, les extrudats obtenus étant ensuite granulés.

3. Procédé selon la revendication 2, **caractérisé en ce que** le poly(acide 3-hydroxybutyrique-co-3-hydroxyvalérique) et le marc de café usagé, séché et moulu, sont mélangés dans un mélangeur à tambour.

4. Procédé selon la revendication 3, **caractérisé en ce que** l'on utilise un mélangeur à tambour ayant un diamètre compris entre 0,1 m et 2 m.

5. Procédé selon la revendication 3 ou 4, **caractérisé en ce que** le mélange du poly(acide 3-hydroxybutyrique-co-3-hydroxyvalérique) avec le marc de café usagé, séché et moulu, dans le mélangeur à tambour, est effectué à une vitesse comprise entre 23 et 37 tours par minute.

6. Procédé selon l'une des revendications 2 à 5, **caractérisé en ce que** le mélange du poly(acide 3-hydroxybutyrique-co-3-hydroxyvalérique) avec le marc de café usagé, séché et moulu, est effectué à température ambiante.

7. Procédé selon l'une des revendications 2 à 6, **caractérisé en ce que** le mélange est séché pendant 3 heures à une température de 90 °C.

8. Procédé selon l'une des revendications 2 à 7, **caractérisé en ce que** le marc de café usagé, séché et moulu, est tamisé sur un tamis avant son mélange avec le poly(acide 3-hydroxybutyrique-co-3-hydroxyvalérique).

9. Procédé selon l'une des revendications 2 à 8, **caractérisé en ce qu'une** extrudeuse monovis est utilisée pour l'extrusion du mélange.

10. Procédé selon la revendication 9, **caractérisé en ce que** l'extrudeuse monovis est utilisée avec une température de la tête d'extrusion comprise entre 157 °C et 175 °C et une température des zones de chauffage du système de plastification de l'extrudeuse comprise entre 148 °C et 170 °C.

11. Procédé selon la revendication 9 ou 10, **caractérisé en ce que** l'extrusion dans l'extrudeuse monovis est réalisée à une vitesse périphérique de la vis comprise entre 4 m/min et 8 m/min.
